# FASCICULE DE BREVET EUROPEEN

(11) **EP 2 018 291 B1**
(45) Date de publication et mention de la délivrance du brevet: **17.08.2011**
(21) Numéro de dépôt: 07724178.4
(22) Date de dépôt: 12.04.2007
(51) Int. Cl.: B60M 7/00, B60L 11/18

(54) **SYSTEME DE REGULATION D'ENERGIE POUR UN VEHICULE**
ENERGIEREGULIERUNGSSYSTEM FÜR EIN FAHRZEUG
ENERGY-REGULATING SYSTEM FOR A VEHICLE

(30) Priorité: 19.05.2006 EP 06290825
(43) Date de publication de la demande: 28.01.2009
(73) Titulaire: Siemens SAS, 93200 Saint-Denis (FR)
(72) Inventeur: CHATTOT, Eric, F-92190 Meudon (FR)
(74) Mandataire: Fischer, Michael
(86) Numéro de dépôt international: PCT/EP2007/003237
(87) Numéro de publication internationale: WO 2007/134674

(56) Documents cités:
- EP-A- 0 968 873
- EP-A2- 0 829 389
- WO-A-2006/008391
- DE-A1- 2 405 198
- FR-A1- 2 336 272

## Description

La présente invention concerne un système de régulation d'énergie pour un véhicule selon le préambule de la revendication 1.

Une approche globale de la gestion de l'énergie dans le but de réduire l'impact environnemental et augmenter les performances économiques du transport de masse ou transport en commun, tel que pour un transport ferroviaire tel qu'un train, une ligne de métro, un tramway, mais aussi pour un bus ou tout autre moyen de transport dont les trajets sont définis de façon déterministe.

D'un point de vue environnemental, plusieurs progrès ont déjà vu jour, à savoir par exemple l'utilisation de pneus au lieu de roues trop bruyantes d'un tramway ou d'un métro classique. Du point de vue économique, le coût de l'énergie du transport de masse représente une part grandissante des coûts d'exploitation, par exemple pour les véhicules à propulsion ou traction alimentés totalement ou partiellement par voie électrique. En particulier, beaucoup de pertes énergétiques sont dues à l'apport d'énergie électrique du sol au véhicule par exemple au travers de rails, câbles ou caténaires le long du trajet du véhicule entre deux stations. Ces mêmes rails, câbles ou caténaires compliquent également l'installation de transports ferroviaires, augmentent leurs coûts et présentent même un danger d'accident pour chaque piéton, cycliste ou motard à leurs proximités.

EP968873A1 divulgue par exemple un système de régulation d'énergie comprenant une charge de super-condensateur (ou super-capacité en tant que moyen de stockage électrique de forte puissance) embarquée dans un véhicule uniquement à l'arrêt du véhicule (en station par exemple). Un groupe électrogène pour alimenter la super-capacité permet une charge de la dite super-capacité sur le trajet du véhicule après son arrêt.

WO2006008391A2 divulgue également un système de régulation d'énergie comprenant une super-capacité et une batterie embarqués dans un véhicule et présentant un mode de fonctionnement où la batterie est l'élément majeur fournissant l'énergie de traction principale et la super-capacité subvient aux besoins énergétiques annexes de la batterie ur le trajet du véhicule. Ce système semble ainsi présenter une altération accrue de la batterie à haute énergie massique en raison au nombre élevé de cycles « charge-décharge ».

Un but de la présente invention est de proposer un système de régulation d'énergie minimisant efficacement l'impact économique et environnemental d'un véhicule à traction ou propulsion électrique étant approprié pour les transports en commun.

Une solution à ce problème est présentée au travers d'un système adéquat décrit par la revendication 1. Plusieurs avantages seront également mentionnés qui illustrent le côté inventif de se système.

Un ensemble de sous-revendications présente également des avantages de l'invention.

Ainsi, il est réalisé un système de régulation d'énergie pour un véhicule, approprié aux transports en commun entre une station de départ et une station d'arrivée, toutes deux séparées par un trajet prédéterminé, pour lequel :
- un moyen de stockage électrique de forte puissance est embarqué dans le dit véhicule fournissant une énergie de traction ou propulsion au dit véhicule, au moins lors d'une accélération,
- une énergie récupérée au freinage du véhicule est stockable dans le moyen de stockage qui ainsi agit comme une source d'énergie à niveau variable,
- au moins la station de départ (ou d'arrivée) comprend une aire de charge électrique pouvant également charger le moyen de stockage du véhicule et qui est activée en mode de charge dès lors que l'énergie résiduelle du dit moyen de stockage (SC_INT) du véhicule est inférieure à un seuil variable dépendant d'un bilan énergétique du véhicule estimé par anticipation au moins jusqu'à la station d'arrivée. En effet, ce seuil peut dépendre de divers paramètres qui régissent une ou plusieurs dépenses énergétiques du véhicule estimées pour son trajet et/ou en station, et ainsi il peut être fixé par exemple au moins pour permettre au véhicule de rejoindre la station d'arrivée. Le bilan énergétique prend aussi en compte des possibles récupérations d'énergie, telle que provenant d'une énergie cinétique récupérée lors d'un freinage au niveau du trajet ou en amont de la station d'arrivée. Des facteurs externes tels que le vent ou le froid peuvent aussi influer sur une consommation ou un apport complémentaire d'énergie sur le bilan.

De cette façon, plusieurs avantages sont apportés :
- l'alimentation électrique du sol vers le véhicule se déroule sur l'aire de charge uniquement, en particulier au niveau d'une station comme un quai pour passagers. Ainsi, des rails, câbles ou caténaires liant le véhicule à une source énergétique au sol ne sont plus indispensables entre les stations. Les pertes d'énergie lors de la transmission de l'alimentation électrique au travers des rails, câbles ou de caténaires hors station (le long du trajet entre les stations) sont donc très avantageusement éliminées.
- du fait de l'absence de rails, câbles ou de caténaires hors station, des risques de défaillances électriques (perte de contact, coupure d'électricité, etc) sont également évités pour le véhicule.
- l'infrastructure sans rails, câbles (ou lignes de tension) ou caténaires le long du trajet ne présente plus de dangers électriques pour les piétons ou divers autres cyclistes traversant une voie de tramway par exemple.

Bien plus, ce système apporte un avantage économiquement fort pour la gestion de l'énergie utile pour le véhicule, du fait que l'aire de charge « au sol » peut être reliée à une source d'énergie électrique, tel qu'un réseau électrique, un générateur comme un moteur ou une pile a combustible, un accumulateur comme une batterie ou un volant d'inertie ou un autre moyen de stockage électrique comme un dispositif capacitif de haute puissance. C'est en particulier ce dernier système qui présente une forte attractivité pour le présent système. En effet, il existe des dispositifs capacitifs de haute puissance tel qu'un condensateur à double-couche, dénommés plus usuellement super-condensateurs ou super-capacités.

Un tel dispositif capacitif permet de livrer une tension stabilisée et résout un problème qui dans le passé a souvent été à la cause de perturbation fréquente dans l'exploitation des systèmes de transport de masse. Si plusieurs véhicules accélèrent simultanément, la tension de la ligne (le long du trajet) pouvait baisser sous un seuil critique et causer une rupture des circuits de protection et entrainer une immobilisation des véhicules. Le retour à un fonctionnement normal pouvait alors prendre du temps; ce qui n'était pas sans gène pour les usagers du véhicule. Avec le dispositif capacitif à forte puissance, aussi connu sous la dénomination SITRAS SES®, quand la tension de la ligne passe en dessous d'un minimum, le système de stockage se décharge et alimente la ligne pour stabiliser la tension.

Le concept de stockage d'énergie de la présente invention s'affranchie avantageusement de la ligne en tension, car consiste en au moins un tel élément de stockage (c'est-à-dire par exemple un super-condensateur ou super-capacité) embarqué, en sus d'un moyen de stockage au sol au niveau d'une aire de charge, par exemple tel qu'un système SYTRAS SES (super-condensateur) au niveau d'une station. Ceci permet également d'offrir une plus grande flexibilité de réponse aux besoins d'exploitations variées de transport en commun.

En particulier, l'aire de charge peut comprendre, sur une longueur finie de déplacement du véhicule en station (par exemple sur une portion longitudinale parallèle au quai en station), un contact électrique couplant le moyen de stockage du véhicule et la dite source au niveau de l'aire de charge, idéalement au moyen d'au moins un rail de traction ou d'un(e) caténaire avec frotteur, ou par l'intermédiaire d'une borne inductive sans frotteur. Ainsi, seul un contact électrique entre le véhicule et le sol est effectué sur l'aire de charge à dimension limitée. Sur toute autre portion de déplacement du véhicule, aucun contact électrique entre le véhicule et le sol n'est donc nécessaire.

La longueur finie de l'aire de charge peut être variable en amont et/ou en aval d'un point d'arrêt du véhicule en station, idéalement par élongation de l'aire de chargement électrique par exemple en rajoutant des rails de tractions autour de l'aire de charge usuellement dimensionnée pour des trajets moyens. L'aspect d'une aire de charge extensible est un atout de choix, par exemple si une consommation d'énergie estimée plus haute pour le trajet suivant est anticipée (notamment si une pente est à prévoir). Bien-sûr, la situation inverse est aussi envisageable, dans le cas par exemple où une descente favoriserait un apport d'énergie (par freinage) de façon autonome pour le véhicule, et donc une dimension réduite de l'aire de charge, donc une simplification de l'infrastructure.

En règle générale et pour des raisons technologiques actuelles concernant les propriétés physiques des super-condensateurs (en tant que moyen de stockage embarqué), une batterie électrique à haute énergie massique est également embarquée dans le véhicule et fournit une énergie électrique au véhicule de façon complémentaire au moyen de stockage du véhicule, en particulier à une vitesse constante du véhicule.

Il est ainsi possible d'utiliser avantageusement la batterie (bonne capacité de stockage, mais faible puissance et nombre limité de cycles « charge-décharge ») et le super-condensateur embarqué (forte puissance, mais faible capacité de stockage, nombre de cycles élevé) dans le cadre d'un système de transport ayant un fonctionnement très régulier. Entre autre, il existe des recherches actuelles qui visent à réaliser des « pseudo-condensateurs » ou autre technologie dite « hybride » alliant les propriétés physiques d'une batterie et d'un super-condensateur. Un tel composant rentre donc également dans le cadre de l'invention. Important est la complémentarité des propriétés physiques, bien connues pour une batterie et un super-condensateur.

Une des stratégies de gestion optimale d'énergie peut ainsi conduire à un tel procédé de régulation d'énergie:
- utiliser le super-condensateur embarqué durant la phase d'accélération du véhicule (car haute puissance exigée),
- utiliser la batterie après la phase d'accélération du véhicule,
- renvoyer l'énergie récupérée au freinage dans le super-condensateur embarqué (rendement d'un super-condensateur supérieur à 85%),
- maintenir un faible taux de décharge de la batterie (par exemple à 5 à 10% de sa capacité) en maximisant par exemple l'utilisation de la super-capacité embarquée à chaque station ou inter-station, ce qui en limite l'usure.

Afin de ne pas dégrader prématurément la batterie et le super-condensateur embarqué, une surcharge (au sens de recharge électrique) de ces moyens de stockage embarqués doit être évitée. En particulier, si le système embarqué est entièrement rechargé alors qu'il se trouve sur l'aire de charge, la recharge au sol doit être inactivée. Egalement, lors d'une phase de freinage du véhicule sur son trajet ou voire même en arrivée sur l'aire de charge de la station d'arrivée, la récupération d'énergie cinétique doit être possible à tout moment. Une anticipation de la recharge des moyens de stockage embarqués est à aussi prévu, de façon par exemple à limiter une recharge à la station de départ, si une faible consommation sur le trajet suivant la station est attendue, ce qui est la cas par exemple pour un véhicule sur un trajet comportant une descente qui limite considérablement le déchargement du moyen de stockage embarqué jusqu'à la station d'arrivée. Cette anticipation peut aussi prendre en compte l'autorechargement du véhicule par l'énergie de freinage récupérée jusqu'à la station d'arrivée.

Une unité de contrôle d'échange(s) d'énergie peut aussi être embarquée pour gérer les flux énergétiques entre les différents systèmes du véhicule et/ou entre le véhicule et les équipements au sol. Il s'agit en autres de façon non-limitative de la batterie, du super-condensateur du véhicule, de la propulsion, des auxiliaires (climatisation, éclairage, etc.), du rail d'alimentation, du moyen de stockage au sol. C'est l'unité de contrôle qui décide par exemple lors d'un freinage si toute l'énergie disponible par régénération est dirigée vers la super-capacité embarquée ou si une partie est utilisée pour recharger la batterie.

Ainsi, la batterie peut occasionnellement charger le moyen de stockage du véhicule (super-condensateur) ou alimenter une autre source de consommation d'énergie du véhicule (climatisation, éclairage, etc.).

Au mieux, une décharge de la batterie (par exemple inférieure à 10% suivant la technologie actuelle) en dessous d'un seuil de meilleur rendement de la batterie (par exemple d'environ 80-85% de sa capacité) est maintenue occasionnelle et de faible magnitude sous le dit seuil pour protéger la durée de vie de la batterie.

Il peut cependant occasionnellement arriver que, au détriment de la durée de vie de la batterie, une décharge de la batterie s'avère forcée en delà de la faible magnitude précédente (par exemple, une décharge nécessaire de 20% amenant la capacité de la batterie à 70%) dans au moins un des cas suivants, dits «modes dégradés»:
- en mode de secours ou de recharge du moyen de stockage du véhicule, en particulier pour un départ du véhicule ;
- en mode de secours d'une aire de charge subitement hors service ;
- en mode de propulsion ou de traction d'un autre véhicule.

Ces cas doivent cependant être évités et du moins contrôlés. Ceci est possible grâce à une unité de contrôle de calibration et de maintenance des niveaux et transferts énergétiques qui peut être embarquée dans le véhicule, et aussi interrogeable par un moyen de communication adapté, par exemple lors du déplacement du véhicule, en station ou en gare de maintenance.

Egalement, il est possible de réaliser une charge de la batterie par récupération d'énergie de freinage du véhicule et/ou directement en station sur l'aire de charge au sol (super-condensateur ou autre moyen de charge adéquate). Toute source d'énergie complémentaire peut être utilisée, telle qu'un panneau solaire sur le toit du véhicule.

Le système de la présente invention peut aussi comprendre un calculateur de prévision énergétique sur la base de plusieurs paramètres entre les stations et pouvant être embarqué sur le véhicule (ou mis en communication avec une centrale externe le cas échéant) et mis en communication avec une unité de commande sur l'aire de charge et/ou vice-versa. Vice-versa signifie que l'unité de commande sur l'aire de charge peut alors être embarqué, en plus ou au lieu du calculateur suivant l'infrastructure exigée ou imposée.

En particulier, les paramètres sont divers et variables ou actualisables pour une plus grande flexibilité de contrôle du système. En règle générale, ils sont d'ordre cinétique - longueur et relief du trajet, vitesse exigée ou possible, poids du véhicule et des passagers, etc - et environnementaux - niveau de climatisation selon une température extérieure, éclairage interne et externe du véhicule, systèmes de communication ou de sécurité pour les passagers, etc -.

Enfin, le calculateur peut être connecté à une unité de commandes à niveaux de priorité afin de compenser une forte consommation d'énergie liée à des paramètres prioritaires par une économie d'énergie liée à des paramètres secondaires. Ainsi, l'intelligence du système de régulation d'énergie est accrue, par exemple pour éviter des contraintes de caractère logistique liées au trafic de véhicule(s) ou pour des soucis de sécurité, de confort, etc.

Un exemple simple de ce cas de figure consiste, en cas de disfonctionnement d'une aire de charge à une des stations, en ce que le calculateur réduit la vitesse sur un trajet ultérieur du véhicule, de façon exacte afin qu'avec une moindre autonomie, il atteigne tout de même une prochaine aire de charge. Des systèmes de secours annexes et embarqués sur le véhicule, comme la batterie, peuvent aussi être mis à contribution. D'autres systèmes consommateurs d'énergie (par exemple pour le confort des passagers) peuvent être très provisoirement arrêtés ou opérés en mode "économie".

Il est aussi possible de disposer au moins une aire de charge supplémentaire sur le trajet entre la station de départ et la station d'arrivée, en particulier permettant une recharge du moyen de stockage du véhicule sans arrêt du véhicule. Ceci implique l'installation par exemple d'un rail de traction à longueur limitée, suffisamment pour effectuer une charge intermédiaire jusqu'à l'aire de charge suivante.

Idéalement bien-sûr, chaque station devrait comprendre une aire de charge. Cependant, suivant les caractéristiques du trajet, il est possible que la super-capacité du moyen de stockage embarqué soit suffisante sans apport d'énergie d'un système au sol en station pour plusieurs trajets consécutifs.

En cas d'accostage d'au moins deux véhicules, il est envisageable que le véhicule tracteur et /ou pousseur devra fournir partiellement ou en sa totalité l'énergie de propulsion et/ou récupérer partiellement ou en sa totalité l'énergie de freinage pour l'ensemble des véhicules accouplés.

Des exemples de réalisation et d'application sont fournis à l'aide de figures décrites :
- Figures 1 à 6: Système de régulation d'énergie et procédé de fonctionnement pour un véhicule sur un trajet entre deux stations,
- Figure 7: Niveau de charge selon la vitesse pour le vé- hicule sur un trajet entre deux stations.

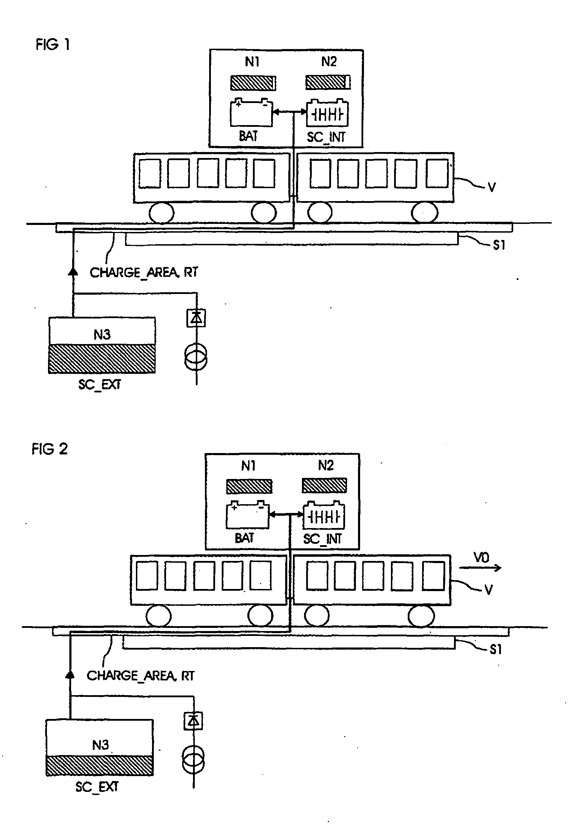

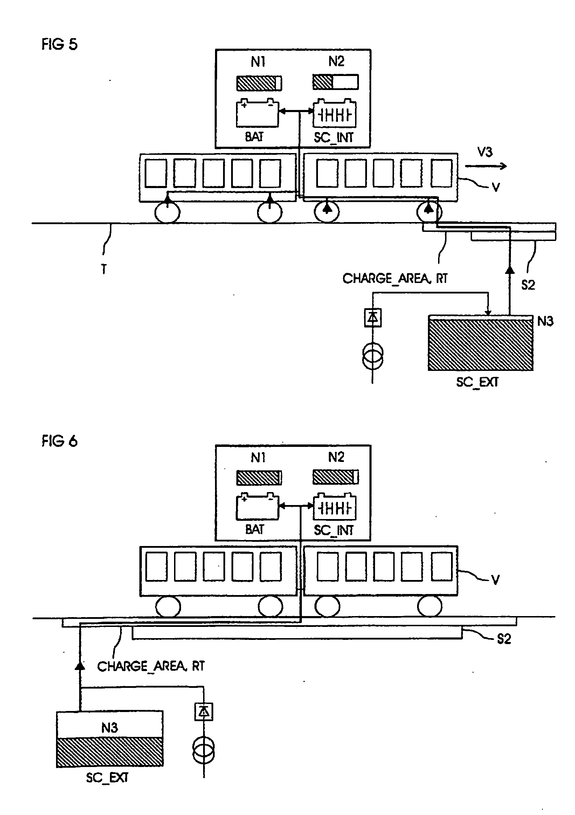

Les figures 1 à 6 représentent un exemple du système de régulation d'énergie décrit précédemment ainsi qu'un procédé de fonctionnement du système pour un véhicule V sur un trajet T entre une station de départ S1 selon les figures 1, 2 et une station d'arrivée S2 selon les figures 5, 6. Les stations S1, S2 comprennent par exemple un quai (sur la longueur des stations S1, S2) pour les passagers tel qu'un arrêt de gare classique pour un métro, un tramway, un bus, etc. Un moyen de stockage d'énergie électrique de forte puissance, ici un super-condensateur SC_INT avec un niveau de charge N2 (pas de hachures = niveau au minimum ; si hachures = niveau plus élevé), est embarqué dans le dit véhicule fournissant une énergie de traction au dit véhicule. Dans cet exemple, une batterie BAT (à forte énergie massique contrairement au super-condensateur) avec un niveau de charge N1 est également embarquée dans le véhicule. Le véhicule comprend ici deux wagons dont au moins un est tracteur ou propulseur. Par l'intermédiaire d'un rail de traction RT au sol le long du quai, un contact électrique est réalisé entre le véhicule et un second super-condensateur SC_EXT (au sol) comme un système SITRAS SES évoqué précédemment avec un niveau de charge ou de stockage d'énergie N3. Ainsi, sur la longueur du rail de traction, la station de départ comprend une aire de charge CHARGE_AREA électrique pouvant charger le moyen de stockage SC_INT du véhicule et qui est activée en mode de charge dès lors que l'énergie résiduelle, c'est-à-dire le niveau N2 du dit moyen de stockage SC_INT du véhicule est inférieure à un seuil variable. Egalement, l'aire de charge CHARGE_AREA peut identiquement charger la batterie. Dans ces figures, les flux d'énergie seront représentés par des flèches de forte épaisseur et indiquent explicitement les divers émetteurs et les récepteurs d'énergie.

A la figure 1, le véhicule est à l'arrêt en station de départ S1. L'alimentation par le rail RT assistée du système SITRAS SES avec le super-condensateur SC_EXT au sol complète la charge du super-condensateur SC_INT embarqué dans le véhicule V et si besoin de la batterie BAT.

A la figure 2, le véhicule démarre avec une vitesse V0 croissante (accélération) et l'alimentation par le rail assistée du système SITRAS SES fournit l'énergie nécessaire au démarrage, car tant que le contact via le rail RT est possible, un maximum d'énergie du super-condensateur SC_EXT au sol doit être utilisé pour économiser le super-condensateur embarqué SC_INT. Le super-condensateur embarqué SC_INT et la batterie BAT sont de plus maintenus en charge. Ainsi, au détriment d'une baisse de niveau N3 du super-condensateur SC_EXT au sol, les niveaux N1, N2 de la batterie et du super-condensateur embarqué SC_INT restent respectivement à un niveau de charge adéquat ou maximum.

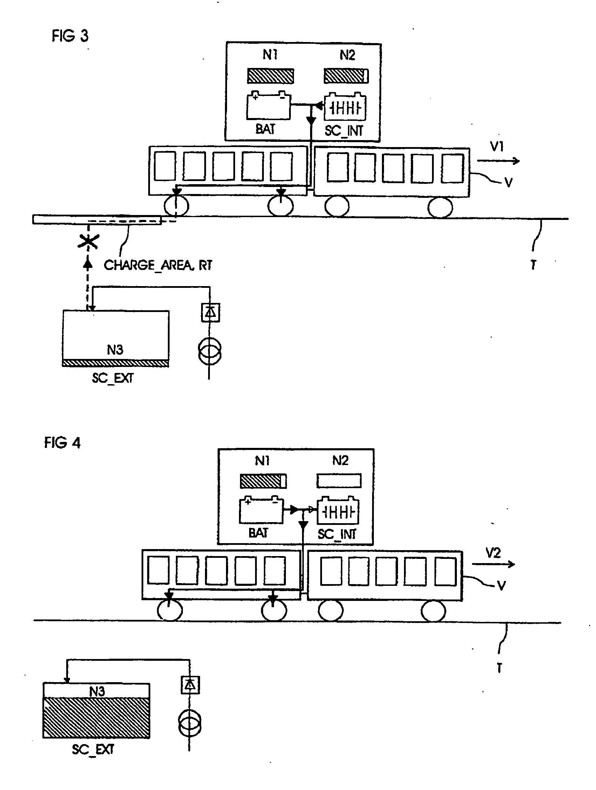

Figure 3 représente la phase où le contact entre le véhicule V (par exemple, via sa roue la plus en aval) au rail RT n'est plus assurée, car le véhicule s'engage sur le trajet T hors de la station de départ S1. Sur le trajet T entre la station de départ S1 et la station d'arrivée S2, le véhicule est autonome et donc électriquement isolé d'une source d'énergie externe au véhicule.

Ainsi, après avoir quitté la station S1 avec une vitesse atteinte V1>V0, toute l'énergie nécessaire pour la traction du véhicule et les auxiliaires du véhicules (climatisation, éclairage, systèmes de commandes, système de navigation si véhicule guidé sans chauffeur, etc) est fournie par le super-condensateur embarqué SC_INT et si besoin la batterie BAT. Le système SITRAS SES avec un niveau de stockage N3 affaibli va être rechargé en attendant l'arrivée d'un prochain véhicule.

Figure 4 montre le véhicule sur le trajet T, après son accélération et une phase à vitesse stabilisée V2, qui s'apprête à ralentir à l'approche de la station d'arrivée S2. Le niveau N2 du super-condensateur embarqué SC_INT peut alors être à son minimum. Si un besoin, d'énergie s'avère, la batterie BAT prendra le relais tel que décrit précédemment. Dès le freinage activé, la vitesse V2 décroit, mais l'énergie cinétique récupérée est canalisée vers le super-condensateur embarqué SC_INT et/ou la batterie. L'énergie de freinage peut alors y être avantageusement stockée (jusqu'à 40% de l'énergie cinétique est récupérée). Par ailleurs, durant ces phases, le ou les systèmes SITRAS SES avec un super-condensateur SC_EXT au sol est/sont rechargé(s) (niveau N3 en hausse) et prêt(s) pour l'arrivée d'un véhicule approchant.

L'arrivée à la station S2 est représentée à la figure 5 pour le véhicule V à une vitesse de freinage V3. L'avant du véhicule est en contact en premier avec le rail de traction RT (par exemple, via un frotteur entre le véhicule et le rail au sol) qui va permettre de déjà compléter la charge des moyens de stockage embarqués SC_INT, BAT, grâce au super-condensateur SC_EXT au sol chargé à un haut niveau N3, cela avant l'arrêt complet du véhicule. D'autres utilisations de l'énergie stockée dans le super-condensateur SC_EXT au sol peuvent être envisagées, tel que pour supplémenter les moyens de stockage embarqués SC_INT, BAT du véhicule si un autre véhicule bloqué en station ou pour permettre d'autres actions mécaniques nécessitant une forte puissance. En résumé, l'énergie de freinage et l'alimentation par le rail assistée du système SITRAS SES recharge le super-condensateur embarqué SC_INT et si besoin la batterie BAT mais peuvent aussi servir de complément d'énergie tant que le véhicule est dans l'aire de charge.

A nouveau, comme la figure 6 le montre identiquement à la figure 1, le véhicule s'arrête donc en station pour permettre aux passagers de monter ou descendre. Durant ce lapse de temps, la charge du super-condensateur embarqué SC_INT et si besoin la batterie BAT est effectuée par le super-condensateur SC_EXT dont le niveau de charge N3 re-diminue alors, cependant pour satisfaire aux objectifs à caractère déterministe d'un prochain trajet.

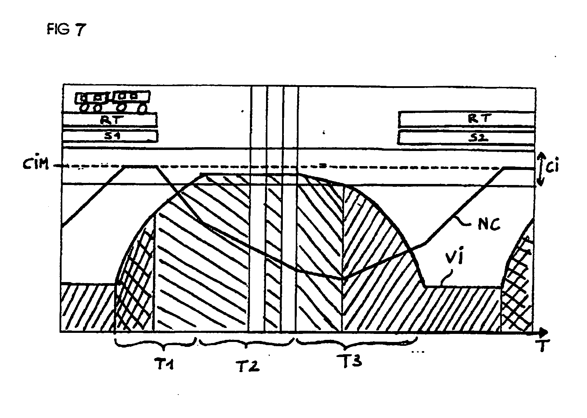

La figure 7 représente un exemple de niveau de charge NC du super-condensateur embarqué SC_INT selon la vitesse VI du véhicule V sur un trajet T entre deux stations S1, S2 (chacune avec un rail de traction RT) en référence aux figures 1 à 6. Les hachures montant vers la droite symbolisent une charge du super-condensateur embarqué SC_INT (et/ou de la batterie), les hachures simples montant vers la gauche symbolisent une décharge du super-condensateur embarqué SC_INT (et/ou de la batterie) et les hachures croisées symbolisent un maintien (non-utilisation) du super-condensateur embarqué SC_INT (et/ou de la batterie).

A la station de départ S1, le train est à l'arrêt (vitesse VI constante car nulle, alors que la charge est en court jusqu'à un seuil de charge ciblé CIM dans un intervalle CI aussi dit de cible selon les objectifs énergétiques donnés), puis lors de sa phase d'accélération de durée T1, le niveau de charge NC reste constant tant qu'un contact ou un flux énergétique sol-véhicule est encore possible. Lorsque le véhicule a dépassé le rail de traction (donc l'aire de charge possible), seul le propre super-condensateur embarqué SC_INT est mis à contribution pour poursuivre la phase d'accélération T1 qui nécessite une forte puissance. Ainsi, les relais énergétiques entre les deux super-condensateurs au sol, puis embarqué est-il assuré. Pendant une phase ultérieure de durée T2, la vitesse VI reste constante. Ici, un effort en puissance n'est pas forcément utile, si le terrain est par exemple plat. Des usages de la batterie au lieu ou en mode de compensation du super-condensateur embarqué SC_INT peuvent alors être effectués de préférence de façon courte. Durant cette phase, le niveau de charge NC du véhicule diminue irrémédiablement, de telle façon que la vitesse VI au moins soit maintenue à une valeur voulue et constante.

Durant une phase finale de ralentissement par freinage de durée T3 sur le trajet T, le niveau de charge ré-augmente par récupération de l'énergie cinétique du véhicule. Le véhicule a ainsi quitté la station de départ avec un niveau de charge NC située dans la zone cible CI et qui doit retourner à sont niveau initial dans la même zobe cible CI dans la mesure du possible lors de son départ de la prochaine station S2. En cas de besoin de la batterie, cette zone cible CI correspond à une variation entre 5 et 10% de la charge nominale pour assurer un nombre de cycles de plus de 300,000 sur des batteries actuelles. Les super-condensateurs ont des cycles de vie plus élevés, entre 500,000 et 1 million selon la technologie actuelle.

## Revendications

1. Système de régulation d'énergie pour un véhicule (V), approprié aux transports en commun entre une station de départ (S1) et une station d'arrivée (S2), toutes deux séparées par un trajet (T) prédéterminé, comprenant :
un moyen de stockage (SC_INT) électrique de forte puissance est embarqué dans le dit véhicule, pour lequel :
- une énergie récupérée au freinage du véhicule est stockée dans le moyen de stockage,
- une batterie (BAT) électrique à haute énergie massique est disposée dans le véhicule,
**caractérisé en ce que**,
au moins la station de départ comprend une aire de charge (CHARGE_AREA) électrique pouvant charger le moyen de stockage (SC_INT) du véhicule et qui est activée en mode de charge dès lors que l'énergie résiduelle du dit moyen de stockage (SC_INT) du véhicule est inférieure à un seuil variable dépendant du bilan énergétique du véhicule estimé par anticipation au moins jusqu'à la station d'arrivée (S2),
- le moyen de stockage (SC_INT) électrique de forte puissance fournit une énergie de traction au dit véhicule, au moins lors d'une accélération,
- la batterie (BAT) électrique à haute énergie massique fournit une énergie électrique au véhicule de façon complémentaire au moyen de stockage (SC_INT) du véhicule à une vitesse constante du véhicule.

2. Système selon revendication 1, pour lequel :
- l'aire de charge (CHARGE_AREA) est reliée à une source d'énergie électrique, tel qu'un réseau électrique, un générateur comme un moteur ou une, pile a combustible, un accumulateur comme une batterie ou un volant d'inertie ou un autre moyen de stockage (SC_EXT) électrique comme un dispositif capacitif de haute puissance,
- l'aire de chargement comprend, sur une longueur finie de déplacement du véhicule en station, un contact électrique couplant le moyen de stockage (SC_INT) du véhicule et la dite source, idéalement au moyen d'au moins un rail de traction (RT) ou d'un(e) caténaire avec frotteur, ou par l'intermédiaire d'une borne inductive sans frotteur.

3. Système selon la revendication 2, pour lequel la longueur finie est variable en amont et/ou en aval d'un point d'arrêt du véhicule en station, idéalement par élongation de l'aire de chargement électrique.

4. Système selon une des revendications précédentes, pour lequel sur le trajet entre la station de départ et la station d'arrivée, le véhicule est électriquement isolé d'une source d'énergie externe au véhicule.

5. Système selon une des revendications précédentes, comprenant une unité de contrôle d'échange d'énergie entre la batterie (BAT), le moyen de stockage (SC_INT) et un élément moteur du véhicule - par exemple lors d'un freinage une énergie régénérée peut être dirigée pour recharger indépendamment la batterie (BAT) et/ou le moyen de stockage (SC_INT) du véhicule.

6. Système selon une des revendications précédentes, pour lequel occasionnellement la batterie charge le moyen de stockage (SC_INT) du véhicule ou alimente une autre source de consommation d'énergie du véhicule.

7. Système selon la revendication 6, pour lequel une décharge de la batterie en dessous d'un seuil de meilleur rendement de la batterie est maintenue occasionnelle et de faible magnitude sous le dit seuil pour protéger la durée de vie de la batterie.

8. Système selon une des revendications 6 ou 7, pour lequel occasionnellement et au détriment de la durée de vie de la batterie, une décharge de la batterie est forcée en delà de la faible magnitude dans au moins un des cas suivants :
- en mode de secours ou de recharge du moyen de stockage (SC_INT) du véhicule, en particulier pour un départ du véhicule ;
- en mode de secours d'une aire de charge (CHARGE_AREA) hors service ;
- en mode de propulsion ou de traction d'un autre véhicule.

9. Système selon une des revendications 6 à 8, pour lequel une charge de la batterie est réalisée par récupération d'énergie de freinage ét/ou en station.

10. Système selon une des revendications 6 à 9, pour lequel une unité de contrôle de calibration et de maintenance des niveaux et transferts énergétiques est embarquée dans le véhicule.

11. Système selon une des revendications précédentes, comprenant un calculateur de prévision énergétique sur la base de plusieurs paramètres entre les stations et pouvant être embarqué sur le véhicule et mis en communication avec une unité de commande sur l'aire de charge et/ou vice-versa.

12. Système selon la revendication 11, pour lequel les paramètres sont d'ordre cinétique - longueur et relief du trajet, vitesse exigée ou possible, poids du véhicule et des passagers, etc - et environnementaux - niveau de climatisation selon une température extérieure, éclairage interne et externe du véhicule, systèmes de communication ou de sécurité pour les passagers, etc -.

13. Système selon une des revendications précédentes 11 ou 12, pour lequel le calculateur est connecté à une unité de commandes à niveaux de priorité afin de compenser une forte consommation d'énergie liée à des paramètres prioritaires par une économie d'énergie liée à des paramètres secondaires.

14. Système selon une des revendications précédentes 11 à 13, pour lequel en cas de disfonctionnement d'une aire de charge à une des stations, le calculateur réduit la vitesse sur un trajet ultérieur du véhicule.

15. Système selon une des revendications précédentes, pour lequel au moins une aire de charge supplémentaire est disposée sur le trajet entre la station de départ et la station d'arrivée, en particulier permettant une recharge du moyen de stockage (SC-INT) du véhicule sans arrêt du véhicule.

16. Système selon une des revendications précédentes, pour lequel un moyen de stockage d'un premier véhicule fournit et/ou stocke son énergie électrique et/ou celle d'un ou plusieurs autres véhicules tractés ou poussés par le premier véhicule.'

17. Système selon une des revendications précédentes, pour lequel un moyen de stockage d'un premier véhicule fournit et/ou stocke l'énergie électrique d'un ou plusieurs autres véhicules tractés ou poussés par le premier véhicule.

18. Système selon une des revendications précédentes, pour lequel le moyen de stockage (SC_INT) est un super-condensateur.

## Claims

1. Energy-regulating system for a vehicle (V), suitable for public transport between a departure station (S1) and an arrival station (S2), the departure station being separated from the arrival station by a predetermined route (T), the energy-regulating system comprising:
- a high-power electrical storage device (SC_INT) placed on board the vehicle wherein:
- any energy recovered during braking of the vehicle is stored in said storage device,
- an electrical battery (BAT) of high mass energy is placed on board said vehicle
**characterised in that**
at least the departure station has an electrical charging area (CHARGE_AREA) for charging said vehicle storage device (SC_INT) and which is activated in charging mode from a moment residual energy of said vehicle storage device (SC_INT) is less than a variable threshold dependent on an energy balance of the vehicle estimated beforehand at least up to the arrival station (S2),
- said high-power electrical storage device (SC_INT) supplies the vehicle with traction power, at least during an acceleration phase,
- the electrical battery (BAT) of high mass energy supplies the vehicle with the electrical power in an additional way to said vehicle storage device (SC_INT) at a constant speed of the vehicle.

2. System according to claim 1, wherein:
- the charging area (CHARGE_AREA) is connected to an electrical power source, such as an electric network, a generator such as a motor or a fuel cell, an accumulator such as a battery or an inertial wheel or another electrical storage device (SC_EXT) such as a high-power capacitive device;
- said charging area contains, along a finite length of movement of the vehicle in the station, an electrical contact coupling said vehicle storage device (SC_INT) and said source, ideally by means of at least one of a traction rail (RT) and a catenary system with contact slipper, or through an inductive terminal without a contact slipper.

3. System according to claim 2, wherein the finite length is variable upstream and/or downstream from a stop point of the vehicle in the station, ideally by stretching the electrical charging area.

4. System according to one of the preceding claims, wherein while on the route between the departure station and the arrival station, the vehicle is electrically isolated from any power source external to the vehicle.

5. System according to one of the preceding claims, comprising an energy transfer control unit for controlling energy transfer between said battery (BAT), said storage device (SC_INT) and a driving part of the vehicle, for example during braking, any energy recovered can be routed to recharge independently said battery (BAT) and/or said vehicle storage device (SC_INT).

6. System according to one of the preceding claims, wherein occasionally said battery charges said storage means (SC_INT) of the vehicle or supplies another source of energy consumption of the vehicle.

7. System according to claim 6, wherein a discharging of said battery below a threshold of a best battery efficiency is allowed only occasionally and only to a small extent below said threshold to spare battery life.

8. System according to one of claims 6 or 7, wherein occasionally and to the detriment of the battery life, a battery discharging is forced beyond the small extent in at least one of the following cases:
- in an emergency mode or recharging mode of the vehicle storage device (SC_INT), including a departure of the vehicle;
- in an emergency mode where the charging area (CHARGE_AREA) is out of order;
and in propulsion or traction mode of another vehicle.

9. System according to one of claims 6 to 8, wherein a charging of said battery is carried out by recovery of braking energy and/or in a station.

10. System according to one of claims 6 to 9, wherein a control unit for calibration and maintenance of energy levels and transfers is placed on board the vehicle.

11. System according to one of the preceding claims, further comprising a calculator of energy forecast performed on the basis of several parameters between the stations and capable of being placed on board the vehicle and put in communication with a control unit at said charging area and/or vice versa.

12. System according to claim 11, wherein the several parameters are of a kinetic nature including length and relief of the route, speed required or possible, weight of the vehicle and of the passengers etc.; and an environmental nature including a level of air-conditioning according to an external temperature, internal and external lighting of the vehicle, communication systems and safety systems for the passengers etc.

13. System according to one of the preceding claims 11 to 13, wherein said calculator is connected to a control unit with priority levels in order to compensate for strong energy consumption related to priority parameters by energy savings related to secondary parameters.

14. System according to one of the preceding claims 11 to 13, wherein in case of malfunctioning of a charging area at one of the stations, said calculator reduces the speed on a later route of the vehicle.

15. System according to one of the preceding claims, wherein at least one additional charging area is placed on the route between the departure station and the arrival station, in particular allowing recharging of said vehicle storage device (SC-INT) without stopping the vehicle.

16. System according to one of the preceding claims, wherein said storage device of a first vehicle supplies and/or stores its own electrical energy and/or that of at least one other vehicle pulled or pushed by the first vehicle.

17. System according to one of the preceding claims, wherein said storage device of the first vehicle supplies and/or stores the electrical energy of at least one other vehicle pulled or pushed by the first vehicle.

18. System according to one of the preceding claims, wherein said storage device (SC-INT) is a super-capacitor.

## Patentansprüche

1. Energieregulierungssystem für ein Fahrzeug (V) für den öffentlichen Verkehr zwischen einer Abgangsstation (S1) und einer Ankunftsstation (S2), die voneinander durch eine vorgegebene Strecke (T) getrennt sind, umfassend: ein in das Fahrzeug integriertes, elektrisches Hochleistungsspeichermittel (SC_INT), bei dem:
- eine beim Bremsen des Fahrzeugs zurückgewonnene Energie im Speichermittel gespeichert wird,
- eine Batterie (BAT) mit hoher Energiedichte im Fahrzeug angeordnet ist,
**dadurch gekennzeichnet, dass**
mindestens die Abgangsstation einen elektrischen Ladebereich (CHARGE_AREA) umfasst, der das Speichermittel (SC_INT) des Fahrzeugs aufladen kann und dessen Ladebetrieb aktiviert wird, sobald die Restenergie des Speichermittels (SC_INT) des Fahrzeugs einen variablen Schwellenwert unterschreitet, welcher von der mindestens bis zur Ankunftsstation (S2) vorausgeschätzten Energiebilanz des Fahrzeugs abhängig ist,
- das elektrische Hochleistungsspeichermittel (SC_INT) mindestens bei einer Beschleunigung eine Antriebsenergie an das Fahrzeug abgibt;
- die elektrische Batterie (BAT) mit hoher Energiedichte bei einer konstanten Geschwindigkeit des Fahrzeugs ergänzend zum Speichermittel (SC_INT) des Fahrzeugs eine elektrische Energie an das Fahrzeug abgibt.

2. System nach Anspruch 1, bei dem:
- der Ladebereich (CHARGE_AREA) mit einer elektrischen Energiequelle wie einem Stromnetz, einem Generator wie einem Motor oder einer Brennstoffzelle, einem Akkumulator wie einer Batterie oder einem Schwungrad oder einem anderen elektrischen Speichermittel (SC_EXT) wie einer kapazitiven Hochleistungsvorrichtung verbunden ist,
- der Ladebereich über eine endliche Bewegungslänge des Fahrzeugs in der Station einen elektrischen Kontakt umfasst, der das Speichermittel (SC_INT) des Fahrzeugs mit dieser Quelle koppelt, idealerweise mittels mindestens einer Stromschiene (RT) oder einer Fahrleitung mit Schleifstück oder über ein induktives Energiezuführungssystem ohne Schleifstück.

3. System nach Anspruch 2, bei dem die endliche Länge vor und/oder hinter einem Haltepunkt des Fahrzeugs in der Station veränderlich ist, idealerweise durch Ausdehnen des elektrischen Ladebereichs.

4. System nach einem der vorangehenden Ansprüche, bei dem das Fahrzeug auf der Strecke zwischen der Abgangsstation und der Ankunftsstation von einer fahrzeugexternen Energiequelle elektrisch isoliert ist.

5. System nach einem der vorangehenden Ansprüche mit einer Einheit zur Steuerung des Energieaustauschs zwischen der Batterie (BAT), dem Speichermittel (SC_INT) und einem Antriebselement des Fahrzeugs, so dass beispielsweise beim Bremsen eine zurückgewonnene Energie so gelenkt werden kann, dass sie unabhängig die Batterie (BAT) und/oder das Speichermittel (SC_INT) des Fahrzeugs auflädt.

6. System nach einem der vorangehenden Ansprüche, bei dem gelegentlich die Batterie das Speichermittel (SC_INT) des Fahrzeugs auflädt oder eine andere Energieverbrauchsquelle des Fahrzeugs speist.

7. System nach Anspruch 6, bei dem ein Entladen der Batterie unter einen Schwellenwert für einen besseren Wirkungsgrad der Batterie auf wenige Male und einen geringen Umfang unter diesem Schwellenwert begrenzt wird, um die Lebensdauer der Batterie zu schützen.

8. System nach einem der Ansprüche 6 oder 7, bei dem gelegentlich und zulasten der Lebensdauer der Batterie ein Entladen der Batterie über den geringen Umfang hinaus in mindestens einem der folgenden Fälle erzwungen wird:
- im Notbetrieb oder Wiederaufladebetrieb des Speichermittels (SC_INT) des Fahrzeugs, insbesondere bei einer Abfahrt des Fahrzeugs;
- im Notbetrieb eines Ladebereichs (CHARGE_AREA), der außer Betrieb ist;
- beim Schieben oder Ziehen eines anderen Fahrzeugs.

9. System nach einem der Ansprüche 6 bis 8, bei dem ein Aufladen der Batterie durch Rückgewinnung von Bremsenergie und/oder in der Station erfolgt.

10. System nach einem der Ansprüche 6 bis 9, bei dem eine Steuereinheit zur Kalibrierung und zum Erhalt der Energiestärken und -übertragungen in das Fahrzeug integriert ist.

11. System nach einem der vorangehenden Ansprüche mit einem Rechner zur energetischen Vorausschätzung auf der Grundlage mehrerer Parameter zwischen den Stationen, der in das Fahrzeug integriert sein kann und mit einer Steuereinheit im Ladebereich in Verbindung gebracht werden kann und/oder umgekehrt.

12. System nach Anspruch 11, bei dem die Parameter kinetische Parameter - Länge und Profil der Strecke, geforderte oder mögliche Geschwindigkeit, Gewicht des Fahrzeugs und der Fahrgäste usw. - und Umweltparameter - Stärke der Klimatisierung in Abhängigkeit von einer Außentemperatur, Innen- und Außenbeleuchtung des Fahrzeugs, Kommunikations-oder Sicherheitssysteme für die Fahrgäste usw. - sind.

13. System nach einem der vorangehenden Ansprüche 11 oder 12, bei dem der Rechner mit einer Steuereinheit mit Prioritätsstufen verbunden ist, um einen hohen Energieverbrauch bei vorrangigen Parametern durch Energieeinsparungen bei nachrangigen Parametern auszugleichen.

14. System nach einem der vorangehenden Ansprüche 11 bis 13, bei dem im Fall der Störung eines Ladebereichs in einer der Stationen der Rechner die Geschwindigkeit des Fahrzeugs auf einer späteren Strecke herabsetzt.

15. System nach einem der vorangehenden Ansprüche, bei dem mindestens ein zusätzlicher Ladebereich auf der Strecke zwischen der Abgangsstation und der Ankunftsstation angeordnet ist, der insbesondere ein Wiederaufladen des Speichermittels (SC-INT) des Fahrzeugs ohne Halt des Fahrzeugs ermöglicht.

16. System nach einem der vorangehenden Ansprüche, bei dem ein Speichermittel eines ersten Fahrzeugs seine elektrische Energie und/oder die eines oder mehrerer anderer Fahrzeuge, die vom ersten Fahrzeug gezogen oder geschoben werden, abgibt und/oder speichert.

17. System nach einem der vorangehenden Ansprüche, bei dem ein Speichermittel eines ersten Fahrzeugs die elektrische Energie eines oder mehrerer anderer Fahrzeuge, die vom ersten Fahrzeug gezogen oder geschoben werden, abgibt und/oder speichert.

18. System nach einem der vorangehenden Ansprüche, bei dem das Speichermittel (SC-INT) ein Super-Kondensator ist.
